# EUROPÄISCHE PATENTSCHRIFT

(11) **EP 2 092 226 B1**
(45) Veröffentlichungstag und Bekanntmachung des Hinweises auf die Patenterteilung: **29.06.2011**
(21) Anmeldenummer: 07802084.9
(22) Anmeldetag: 03.09.2007
(51) Int. Cl.: F16K 31/42

(54) **MEHRWEGEVENTIL**
MULTIWAY VALVE
DISTRIBUTEUR À PLUSIEURS VOIES

(43) Veröffentlichungstag der Anmeldung: 26.08.2009
(73) Patentinhaber: FESTO AG & Co. KG, 73734 Esslingen (DE)
(72) Erfinder: KESTEN, Kirsten, 73760 Ostfildern (DE); RÄPKE, Falk, 72076 Tübingen (DE); BOGDANOWICZ, Grzegorz, 73760 Ostfildern (DE)
(74) Vertreter: Abel, Martin
(86) Internationale Anmeldenummer: PCT/EP2007/007667
(87) Internationale Veröffentlichungsnummer: WO 2009/030249

(56) Entgegenhaltungen:
- EP-A- 0 128 003
- WO-A-03/023233
- DE-A1- 4 011 908
- US-A- 4 150 695
- US-B1- 6 585 004

## Beschreibung

Die Erfindung betrifft ein Mehrwegeventil, mit einem Ventilgehäuse, das eine längliche Gehäuseausnehmung definiert, in der ein zwischen mehreren Schaltstellungen umschaltbarer Ventilschieber angeordnet ist, der einen zur Steuerung von Fluidströmen mit am Ventilgehäuse angeordneten Dichtflächen zusammenwirkenden länglichen Steuerkolben und einen an einem vorderen Endbereich des Steuerkolbens angeordneten, als bewegliche Trennwand zwischen einer auf der Seite des Steuerkolbens angeordneten und letzteren ringförmig umschließenden hinteren Beaufschlagungskammer und einer auf der dem Steuerkolben entgegengesetzten Seite angeordneten vorderen Beaufschlagungskammer bildenden Betätigungskolben aufweist, wobei der Steuerkolben mit seinem dem Betätigungskolben entgegengesetzten hinteren Endbereich frei endend in einen hinteren Endabschnitt der Gehäuseausnehmung hineinragt und wobei zwei Vorsteuerventile vorhanden sind, durch die die beiden Beaufschlagungskammern zur Vorgabe der Schaltstellung des Ventilschiebers gesteuert mit fluidischem Druckmedium beaufschlagbar sind.

Ein aus der DE 40 11 908 A1 bekanntes Mehrwegeventil dieser Art verfügt über einen einstückigen Ventilschieber mit einem länglichen Steuerkolben und stirnseitig daran angeordnetem Betätigungskolben. Der Betätigungskolben trennt eine vordere und eine hintere Beaufschlagungskammer voneinander ab, die unter Vermittlung zweier elektrisch betätigbarer Vorsteuerventile gesteuert mit fluidischem Druckmedium beaufschlagbar sind, um den Ventilschieber in einer gewünschten Schaltstellung zu positionieren. Der rückseitige Endbereich des Steuerkolbens endet in einem hinteren Endabschnitt der den Ventilschieber aufnehmenden Gehäuseausnehmung und trägt dort Mittel einer Zentriereinrichtung, durch die der Ventilschieber im unbetätigten Zustand in einer Mittelstellung zentriert wird. Für manche Ansteuerungsaufgaben problematisch ist der Umstand, dass die an dem Betätigungskolben vorhandenen, einander entgegengesetzten Beaufschlagungsflächen unterschiedlich groß sind, was unterschiedliche Umschaltgeschwindigkeiten in den beiden Umschaltrichtungen zur Folge hat.

Gleich hohe Umschaltgeschwindigkeiten in den beiden Umschaltrichtungen lassen sich zwar dadurch realisieren, dass gemäß DE 200 15 905 U1 beiden Endabschnitten des Ventilschiebers je ein Betätigungskolben zugeordnet wird, die für je eine Umschaltrichtung verantwortlich sind. Damit ist jedoch in der Regel eine größere Baulänge verbunden und eine umständlichere Kanalführung für die Steuerkanäle im Innern des Ventilgehäuses.

Aus der US 2 916 879 geht ein in Verbindung mit einem Hydraulikaggregat erläutertes Ventil vor, dessen Ventilschieber durch Federmittel in eine Mittelstellung zentriert ist, aus der er durch wahlweise Fluidbeaufschlagung des einen oder anderen Endabschnittes in die eine oder andere Richtung verlagert werden kann.

Es ist eine Aufgabe der vorliegenden Erfindung, ein Mehrwegeventil der eingangs genannten Art zu schaffen, das mit einfachen Mitteln gleich hohe Umschaltgeschwindigkeiten in den beiden Umschaltrichtungen des Ventilschiebers ermöglicht. Zur Lösung dieser Aufgabe ist in Verbindung mit den eingangs genannten Merkmalen vorgesehen, dass die hintere Beaufschlagungskammer über mindestens einen internen Verbindungskanal des Steuerkolbens unabhängig von der Schaltstellung des Ventilschiebers ständig mit dem hinteren Endabschnitt der Gehäuseausnehmung in Fluidverbindung steht.

Durch diese einfache Maßnahme wird erreicht, dass die einander entgegengesetzt orientierten Beaufschlagungsflächen des Ventilschiebers, die in Abhängigkeit von der gewünschten Umschaltrichtung mit Druckmedium beaufschlagt werden, gleich groß sind. Dies ermöglicht bei gleich hohem Betätigungsdruck auch gleich hohe Umschaltgeschwindigkeiten in den beiden Umschaltrichtungen, was die Integration des Mehrwegeventils in pneumatische Steuerungsabläufe erleichtert. Erreicht wird dies dadurch, dass mit Hilfe des Verbindungskanals eine Fluidverbindung zwischen der hinteren Beaufschlagungskammer und dem hinteren Endabschnitt der Gehäuseausnehmung geschaffen wird, so dass das hier gesteuert eingespeiste Druckmedium anders als bei dem diskutierten Stand der Technik nicht nur eine Ringfläche am Betätigungskolben beaufschlagt, sondern auch noch die rückseitige Stirnfläche des Steuerkolbens und die den Verbindungskanal im vorderen Bereich abschließende Fläche, wobei diese Gesamtfläche der nach vorne weisenden, die vordere Beaufschlagungskammer begrenzenden Beaufschlagungsfläche des Ventilschiebers entspricht. Hierbei ist es für die Ansteuerung des Ventilschiebers unerheblich, in welchem Bereich das für die Betätigung benötigte Druckmedium in den Verbund aus hinterer Beaufschlagungskammer, Verbindungskanal und hinterem Endabschnitt der Gehäuseausnehmung eingespeist wird. Wie beim Stand der Technik kann das Druckmedium weiterhin direkt in die ringförmige hintere Beaufschlagungskammer eingespeist werden, von wo es dann auch über den Verbindungskanal in den hinteren Endabschnitt der Gehäuseausnehmung gelangt. Insbesondere wenn die beiden Vorsteuerventile einander entgegengesetzten Endbereichen des Mehrwegeventils zugeordnet sind, empfiehlt sich allerdings eine Fluideinspeisung in den hinteren Endabschnitt der Gehäuseausnehmung, von wo aus das Druckmedium durch den Verbindungskanal hindurch in die hintere Beaufschlagungskammer gelangt.

Vorteilhafte Weiterbildungen der Erfindung gehen aus den Unteransprüchen hervor.

Zur Realisierung des Verbindungskanals verwendet man zweckmäßigerweise einen hohl ausgebildeten Steuerkolben.

Zweckmäßigerweise ist der Verbindungskanal so im Steuerkolben angeordnet, dass er an der rückwärtigen Stirnfläche des Steuerkolbens zum hinteren Endabschnitt der Gehäuseausnehmung ausmündet.

Es wäre prinzipiell möglich, die Fluidverbindung durch den Steuerkolben hindurch mittels mehrerer parallel geschalteter Verbindungskanäle zu realisieren. Kostengünstiger ist jedoch eine Variante mit nur einem einzigen Verbindungskanal ausreichenden Querschnittes.

Um eine besonders einfache Verbindung zwischen dem Verbindungskanal und der hinteren Beaufschlagungskammer zu erhalten, kann axial im Anschluss an den Betätigungskolben mindestens ein die Wandung des Ventilschiebers quer durchsetzender Querkanal ausgebildet sein. Es können mehrere über den Umfang verteilte Querkanäle vorhanden sein.

Die Erfindung erweist sich besonders vorteilhaft in Verbindung mit einem Mehrwegeventil, das über Zentriermittel verfügt, durch die der Ventilschieber im vorsteuerseitig drucklosen Zustand in einer vorbestimmten Mittelstellung zentriert wird. Hierbei verfügt der Ventilschieber über einen Ventilschieberhohlraum, der eine die Mittelstellung bewirkende Druckfedereinrichtung aufnimmt und der gleichzeitig, quasi als Doppelfunktion, auch den für die Druckverteilung herangezogenen Verbindungskanal bildet.

Vorzugsweise umfassen die Zentriermittel zwei die Druckfedereinrichtung auf axial entgegengesetzten Seiten flankierende Zentrierstößel, die axial beweglich im Ventilschieber geführt sind und die je einen länglichen Stößelabschnitt aufweisen, um sich am Ventilgehäuse in entgegengesetzten Richtungen axial abstützen zu können und den Ventilschieber dadurch federnd einzuspannen. Wird ein ausreichend hoher Betätigungsdruck in der einen oder anderen Richtung aufgebracht, verlagert sich der Ventilschieber unter gleichzeitiger Komprimierung der Druckfedereinrichtung, so dass er nach Wegnahme des Betätigungsdruckes wieder in die Mittelstellung zurückkehrt.

Die beiden Zentrierstößel sind durch die Druckfedereinrichtung zweckmäßigerweise in eine Grundstellung vorgespannt, in der sie sich jeweils mit einem Kopfabschnitt an einer zugeordneten, im Steuerkolben fixierten Anschlaghülse abstützen. Die vordere Anschlaghülse kann hierbei gleichzeitig als Verbindungshülse zur mechanischen Anbindung des Betätigungskolbens herangezogen werden. Ein oder mehrere die Wandung der vorderen Anschlaghülse durchsetzende Querkanäle schaffen hierbei die Fluidverbindung zwischen dem Verbindungskanal und der hinteren Beaufschlagungskammer.

Damit die Fluidströmung durch den Verbindungskanal nicht beeinträchtigt wird, kann die hintere Anschlaghülse mehrere axiale Fluiddurchtrittsöffnungen aufweisen, beispielsweise in Form von in den Außenumfang eingebrachten Längsnuten.

Nachfolgend wird die Erfindung anhand der beiliegenden Zeichnung näher erläutert. In dieser zeigen:
- Figur 1: einen Längsschnitt durch eine bevorzugte Ausfüh- rungsform des erfindungsgemäßen Mehrwegeventils, wobei der Ventilschieber die zentrierte Mittelstel- lung einnimmt,
- Figur 2: den in Figur 1 umrahmten Ausschnitt II in vergrö- ßerter Darstellung,
- Figur 3: einen Querschnitt gemäß Schnittlinie III - III durch das Mehrwegeventil,
- Figur 4: das Mehrwegeventil bei aus der Mittelstellung nach hinten in eine zweite Schaltstellung verlagertem Ventilschieber, und
- Figur 5: das Mehrwegeventil bei aus der Mittelstellung nach vorne in eine dritte Schaltstellung verlagertem Ventilschieber.

Das beispielhaft abgebildete, in seiner Gesamtheit mit Bezugsziffer 1 bezeichnete Mehrwegeventil ist als Ventil mit drei Schaltstellungen konzipiert und exemplarisch als 4/3-Wegeventil ausgebildet. In seinem Ventilgehäuse 2 verlaufen ein mit einer externen Druckquelle verbindbarer Speisekanal 3, zwei mit einem externen Verbraucher verbindbare Arbeitskanäle 4, 5 und zwei zu einer externen Drucksenke, insbesondere der Atmosphäre führende Abführkanäle 6, 7. In der Regel wird das Mehrwegeventil 1 mit Druckluft als fluidischem Druckmedium betrieben, wobei die Abführkanäle 6, 7 dann Entlüftungskanäle sind. Als Verbraucher kommt beispielsweise ein mittels Fluidkraft betätigbarer Antrieb in Frage.

Die genannten Kanäle 3 - 7 münden jeweils zur Außenfläche des Ventilgehäuses 2 aus, wobei den Mündungsbereichen von wenigstens dem Speisekanal 3 und den beiden Arbeitskanälen 4, 5 Anschlussmittel 8, beispielsweise Steckverbindungsmittel, zugeordnet sein können, die einen leicht lösbaren Anschluss einer Fluidleitung ermöglichen.

Die beiden Abführkanäle 6, 7 sind im Innern des Ventilgehäuses 2 an einer Vereinigungsstelle 12 zusammengeführt und münden daher über eine gemeinsame Austrittsöffnung 13 zur Außenfläche des Ventilgehäuses 2 aus. Alternativ könnte das Mehrwegeventil 1 auch als 5/3-Wegeventil konzipiert sein, wobei dann die beiden Abführkanäle 6, 7 über jeweils eine eigene Austrittsöffnung 13 am Ventilgehäuse 2 verfügen würden.

Im Innern des Ventilgehäuses 2 erstreckt sich eine längliche, bevorzugt im Wesentlichen zylindrische Gehäuseausnehmung 14 mit Längsachse 15. Die verschiedenen Kanäle 3 bis 7 - im Folgenden gesamthaft als "Ventilkanäle" bezeichnet - münden in an sich bekannter Weise mit axialem Abstand zueinander umfangsseitig in die Gehäuseausnehmung 14 ein, wobei die hierbei mit ihnen kommunizierenden Längenabschnitte 17 der Gehäuseausnehmung 14 axial beidseits von je einem in die Gehäuseausnehmung 14 eingesetzten ringförmigen Dichtelement 16 begrenzt werden, das eine gehäusefeste ringförmige Dichtfläche 16a definiert. Axial benachbarte Längenabschnitte 17 sind hierbei durch ein je gemeinsam zugeordnetes Dichtelement 16 voneinander abgegrenzt.

In der Gehäuseausnehmung 14 erstreckt sich koaxial ein länglicher Ventilschieber 18, der mit einem länglichen Steuerkolben 22 sämtliche ringförmigen Dichtelemente 16 durchsetzt. An dem in der Zeichnung links liegenden und zur besseren Unterscheidung im Folgenden als vorderer Endbereich 23 bezeichneten Endbereich des Steuerkolbens 22 ist als weitere Komponente des Ventilschiebers 18 ein einen größeren Durchmesser als der Steuerkolben 22 aufweisender Betätigungskolben 24 angeordnet, der derart axial fest mit dem Steuerkolben 22 verbunden ist, dass er auf diesen sowohl Schubkräfte als auch Zugkräfte ausüben kann.

Der Ventilschieber 18 ist in der Gehäuseausnehmung 14 axial verschiebbar angeordnet, wobei seine mögliche Bewegung als Umschaltbewegung bezeichnet sei und in der Zeichnung bei 25 durch einen Doppelpfeil markiert ist. Die Umschaltbewegung 25 kann mittels eines den Ventilschieber 18 axial beaufschlagenden fluidischen Druckmediums hervorgerufen werden, was es ermöglicht, den Ventilschieber 18 alternativ in jeweils einer der beim Ausführungsbeispiel möglichen drei Schaltstellungen zu positionieren.

Der Steuerkolben 22 ist außen zylindrisch ausgebildet, allerdings in axialer Richtung mehrfach abgestuft, so dass sich Längenabschnitte größeren Außendurchmessers mit Längenabschnitten kleinen Außendurchmessers abwechseln. Die Längenabschnitte größeren Außendurchmessers sind in der Lage, bei entsprechender Axialposition des Ventilschiebers 18 mit einer oder mehreren der Dichtflächen 16a in Dichtkontakt zu treten und dadurch die aneinander angrenzenden Längenabschnitte 17 fluiddicht voneinander abzutrennen. Kommt ein Längenabschnitt kleineren Außendurchmessers auf axialer Höhe einer Dichtfläche 16a zu liegen, kann das Fluid zwischen den benachbarten Längenabschnitten 17 überströmen. Somit ergeben sich je nach Schaltstellung des Ventilschiebers 18 unterschiedliche Verbindungsmuster für die Ventilkanäle 3 bis 7.

An dem Ventilschieber 18 sind axial entgegengesetzt orientierte erste und zweite Beaufschlagungsflächen A₁, A₂ ausgebildet, die mit einem im Folgenden als Steuerfluid bezeichneten fluidischem Druckmedium beaufschlagbar sind, um eine in die eine oder andere Bewegungsrichtung wirksame fluidische Umschaltkraft auf den Ventilschieber 18 auszuüben. Das Steuerfluid für die Beaufschlagung der ersten Beaufschlagungsflächen A₁ wird in die Gehäuseausnehmung 14 über einen im Ventilgehäuse 2 verlaufenden ersten Steuerkanal 26 eingespeist, das die zweiten Beaufschlagungsflächen A₂ beaufschlagende Steuerfluid über einen ebenfalls im Ventilgehäuse 2 verlaufenden zweiten Steuerkanal 27. Die beiden Steuerkanäle 26, 27 verlaufen größtenteils außerhalb der Zeichenebene und sind deshalb nur gestrichelt angedeutet. Sie gehen jeweils vom Speisekanal 3 aus und greifen den darin herrschenden Betriebsdruck als Betätigungsdruck ab, wobei die Abgriffsstelle bei 28' liegt.

Der Fluiddurchgang durch die beiden Steuerkanäle 26, 27 wird von je einem eigens zugeordneten ersten bzw. zweiten Vorsteuerventil 28, 29 gesteuert. Die beiden Vorsteuerventile 28, 29 sind beim Ausführungsbeispiel an entgegengesetzten Stirnseiten des Mehrwegeventils 1 angeordnet, wobei sie bevorzugt lösbar an einen Mittelabschnitt 32 des Ventilgehäuses 2 angebaut sind, in dem sich die Gehäuseausnehmung 14 und der Ventilschieber 18 erstrecken.

Die beiden Vorsteuerventile 28, 29 sind unabhängig voneinander elektrisch betätigbar und insbesondere als Magnetventil ausgebildet. Ihre Schnittstellen zur Einspeisung der elektrischen Steuersignale sind bei 33 ersichtlich. Jedes Vorsteuerventil 28, 29 verfügt über ein Vorsteuerventilglied 34, mit dem es den Fluiddurchgang durch den zugeordneten Steuerkanal 26, 27 beherrscht, um den zugeordneten Steuerkanal 26, 27 wahlweise abzusperren oder für den Durchlass des Steuerfluides freizugeben.

Der Betätigungskolben 24 befindet sich in einem in der Zeichnung links liegenden, zur besseren Unterscheidung als vorderer Endabschnitt 35 bezeichneten Endabschnitt der Gehäuseausnehmung 14 und schließt sich an die vorderste (16a') der Dichtflächen 16a an, mit der der Steuerkolben 22 unabhängig von der eingenommenen Schaltstellung in Dichtkontakt steht.

Der Betätigungskolben 24 trägt eine mit der Umfangswand des vorderen Endabschnittes 35 in Dichtkontakt stehende ringförmige Dichtung 36 und unterteilt den vorderen Endabschnitt 35 axial in eine auf der Seite des Steuerkolbens 22 angeordnete hintere Beaufschlagungskammer 37 und eine auf der dem Steuerkolben 22 axial entgegengesetzte Seite angeordnete vordere Beaufschlagungskammer 38. Da sich der Betätigungskolben 24 beim Umschalten des Ventilschiebers 18 bewegt, bildet er praktische eine axial bewegliche Trennwand zwischen den beiden Beaufschlagungskammern 37, 38.

Da die hintere Beaufschlagungskammer 37 von dem Steuerkolben 22 durchsetzt wird, ist sie ringförmig ausgebildet und befindet sich radial zwischen dem Außenumfang des Steuerkolbens 22 und der Innenumfangsfläche des vorderen Endabschnittes 35.

Mit seinem dem Betätigungskolben axial entgegengesetzten hinteren Endbereich 42 ragt der Steuerkolben 22 frei endend in den dem vorderen Endabschnitt 35 axial entgegengesetzten hinteren Endabschnitt 43 der Gehäuseausnehmung 14 hinein. Ein den Steuerkolben 22 axial durchsetzender Verbindungskanal 44 sorgt unabhängig von der Schaltstellung des Ventilschiebers 18 für eine ständige Fluidverbindung zwischen dem hinteren Endabschnitt 43 der Gehäuseausnehmung 14 und der ringförmigen hinteren Beaufschlagungskammer 37.

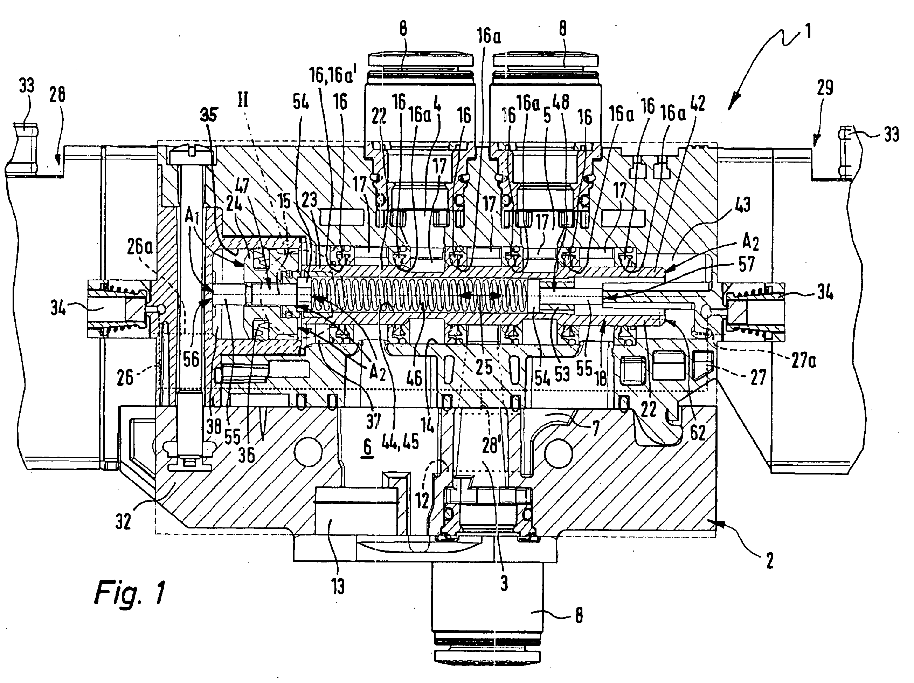

Das Mehrwegeventil 1 ist mit Zentriermitteln ausgestattet, die dafür sorgen, dass der Ventilschieber 18 die aus Figur 1 ersichtliche Mittelstellung einnimmt, wenn die beiden Steuerkanäle 26, 27 abgesperrt sind und er von keinem Steuerfluid beaufschlagt ist.

Zur Bildung der Zentriermittel ist der Ventilschieber 18 koaxial durchgehend von einem Ventilschieberhohlraum 45 durchsetzt, dessen im Steuerkolben 22 verlaufender Längenabschnitt den Verbindungskanal 44 bildet. In diesem Zusammenhang ist der Steuerkolben 22 durchgängig hohl ausgebildet, was eine besonders einfache Herstellung mit größtmöglichem Querschnitt für den Verbindungskanal 44 ermöglicht.

Im Innern des Verbindungskanals 44 befindet sich eine bevorzugt von einer oder mehreren Schraubendruckfedern gebildete mechanische Druckfedereinrichtung 46. Sie ist axial von je einem in axialer Richtung relativ zum Ventilschieber 18 beweglichen Zentrierstößel 47, 48 flankiert, wobei sie diese beiden Zentrierstößel 47, 48 in einander entgegengesetzte Richtungen axial beaufschlagt. Die Zentrierstößel 47, 48 sind hierbei gemäß Figur 1 in der Lage, durch gleichzeitig axiale Abstützung gegenüber dem Ventilgehäuse 2 den Ventilschieber 18 in der Mittelstellung zu zentrieren.

Die maximal ausgefahrene Lage der beiden Zentrierstößel 47, 48 wird von einer dem vorderen Zentrierstößel 47 zugeordneten vorderen Anschlaghülse 52 und von einer dem hinteren Zentrierstößel 48 zugeordneten hinteren Anschlaghülse 53 vorgegeben. Die beiden Anschlaghülsen 52, 53 sind jeweils zumindest ein Stück weit von entgegengesetzten Seiten her in den den Verbindungskanal 44 bildenden Hohlraum des Steuerkolbens 22 eingesetzt und dort axial unbeweglich fixiert. Letzteres kann durch Einpressen oder auch durch Einschrauben erfolgen.

Jeder Zentrierstößel 47, 48 besitzt einen der Druckfedereinrichtung 46 zugewandten und von dieser beaufschlagten Kopfabschnitt 54, der sich an der zugeordneten Anschlaghülse 52, 53 axial abstützen kann. Ferner besitzt jeder Zentrierstößel 47, 48 einen sich an den Kopfabschnitt 54 mit kleinerem Durchmesser anschließenden länglichen Stößelabschnitt 55, der die Anschlaghülse 52, 53 koaxial durchsetzt und aus der Anschlaghülse 52, 53 herausragen kann.

Der vordere Zentrierstößel 47 kann sich mit der Stirnfläche 56 seines Stößelabschnittes 55 an der die vordere Beaufschlagungskammer 38 axial begrenzenden Gehäusewand abstützen. Der hintere Zentrierstößel 48 kann sich mit seiner Stirnfläche 57 an der den hinteren Endabschnitt 43 der Gehäuseausnehmung 14 axial begrenzenden Gehäusewand abstützen, die hier allerdings mit einem axialen Fortsatz ein Stück weit in den Steuerkolben 22 eintaucht, so dass die Kooperation zwischen dem hinteren Zentrierstößel 48 und dem Ventilgehäuse 2 innerhalb des Verbindungskanals 44 stattfindet.

Der vordere Zentrierstößel 47 durchsetzt mit seinem Stößelabschnitt 55 unter Abdichtung auch den Betätigungskolben 24 und steht in der Mittelstellung gemäß Figur 1 über dessen Stirnfläche vor.

Die vordere Anschlaghülse 52 wird beim Ausführungsbeispiel gleichzeitig als mechanisches Verbindungselement zwischen dem Steuerkolben 22 und dem Betätigungskolben 24 eingesetzt. Hierbei ragt die vordere Anschlaghülse 52 ein Stück weit in den Betätigungskolben 24 hinein und ist mit diesem durch Querstifte 58 axial fest verbunden. Die vordere Anschlaghülse 52 kann also auch als Verbindungshülse bezeichnet werden.

Anstatt mittels Querstiften 58 könnte die vordere Anschlaghülse 52 auch auf andere Weise am Befestigungskolben 24 fixiert sein, beispielsweise durch Einpressen oder Einkleben.

Es wäre auch prinzipiell möglich, Betätigungskolben 24 und Steuerkolben 22 als einstückig miteinander verbundene Bestandteile des Ventilschiebers 18 auszubilden.

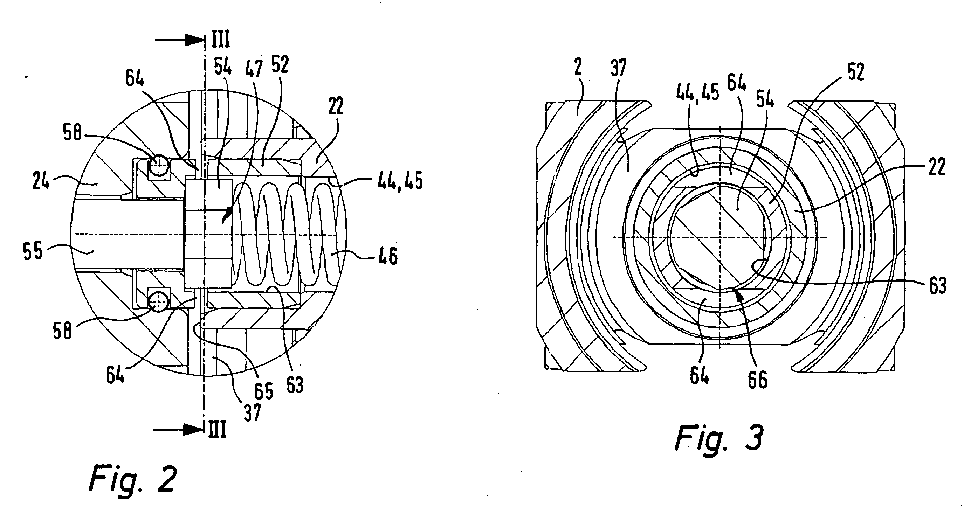

Exemplarisch fungiert der gesamte Hohlraum des Steuerkolbens 22 als Verbindungskanal 44. Er mündet an der rückwärtigen Stirnfläche 62 des Steuerkolbens 22 zu dem hinteren Endabschnitt 43 der Gehäuseausnehmung 14 aus. In seinem vorderen Endbereich geht er in den Innenraum 63 der vorderen Anschlaghülse 52 über - siehe Figur 2 - und ist über zwei die Wandung der vorderen Anschlaghülse 52 durchsetzende Querkanäle 64 mit der hinteren Beaufschlagungskammer 37 verbunden.

Die Querkanäle 64 befinden sich zweckmäßigerweise axial unmittelbar im Anschluss an den Betätigungskolben 24, wobei die vordere Anschlaghülse 52 den Steuerkolben 22 und den Betätigungskolben 24 vorzugsweise derart in einem Abstand zueinander hält, dass dazwischen ein axialer Zwischenraum 65 ausgebildet ist, der eine ungehinderte Fluidverbindung zwischen den Querkanälen 64 und der hinteren Beaufschlagungskammer 37 gewährleistet.

Die beiden Querkanäle 64 können beispielsweise durch tangential in die Wandung der vorderen Anschlaghülse 52 eingebrachte Querschlitze gebildet sein. Abweichend von der vorhandenen Zweizahl von Querkanälen 64 könnte auch eine andere Anzahl von Querkanälen 64 vorhanden sein.

Da der Kopfabschnitt 54 des vorderen Zentrierstößels 47 in der Grundstellung auf gleicher Höhe mit den Querkanälen 64 liegt, ist sein Außenumfang 66 partiell abgeflacht und ermöglicht so einen problemlosen Fluiddurchgang.

Die hintere Anschlaghülse 53 verfügt zur Gewährleistung eines ungehinderten Fluiddurchtrittes über mindestens eine und vorzugsweise mehrere axial durchgehende Fluiddurchtrittsöffnungen 67, insbesondere in Gestalt von am Außenumfang angeordneten Längsnuten. Der Kopfabschnitt 54 des hinteren Zentrierstößels 48 ist wie derjenige des vorderen Zentrierstößels 47 so gestaltet, dass ein Fluid in der Lage ist, an seinem Außenumfang vorbeizuströmen.

Anstelle der hinteren Anschlaghülse 53 könnte auch direkt am Steuerkolben 22 ein Anschlagbund ausgebildet sein, um die gewünschte Anschlagfunktion zu realisieren.

Der erste Steuerkanal 26 mündet direkt in die vordere Beaufschlagungskammer 38. Die von dem hier eingespeisten Steuerfluid beaufschlagten ersten Beaufschlagungsflächen A1 setzen sich aus der vorderen Stirnfläche des Betätigungskolbens 24 und der Stirnfläche 56 des vorderen Zentrierstößels 47 zusammen. Die ersten Beaufschlagungsflächen A₁ definieren somit insgesamt eine erste Gesamtbeaufschlagungsfläche entsprechend der Querschnittsfläche des vorderen Endabschnittes 35 der Gehäuseausnehmung 14.

Der zweite Steuerkanal 27 mündet beim Ausführungsbeispiel direkt in den hinteren Endabschnitt 43 der Gehäuseausnehmung 14 ein. Von dort gelangt das Steuerfluid über den Verbindungskanal 44 und die beiden Querkanäle 64 auch in die hintere Beaufschlagungskammer 37. Hier herrscht folglich überall der gleiche Betätigungsdruck. Die von dem über den zweiten Steuerkanal 27 eingespeisten Steuerfluid beaufschlagten zweiten Beaufschlagungsflächen A₂ setzen sich aus der hinteren Stirnfläche 62 des Steuerkolbens 22, aus der die hintere Beaufschlagungskammer 37 begrenzenden hinteren ringförmigen Stirnfläche des Betätigungskolbens 24 und aus den axial rückwärts orientierten Flächen innerhalb des Verbindungskanals 44 zusammen, denen kein ein Druckkraftausgleich hervorrufender Flächen-Widerpart zugeordnet ist. Daraus resultiert eine sich aus den zweiten Beaufschlagungsflächen A₂ zusammensetzende zweite Gesamtbeaufschlagungsfläche, die gleich groß ist wie die erste Gesamtbeaufschlagungsfläche.

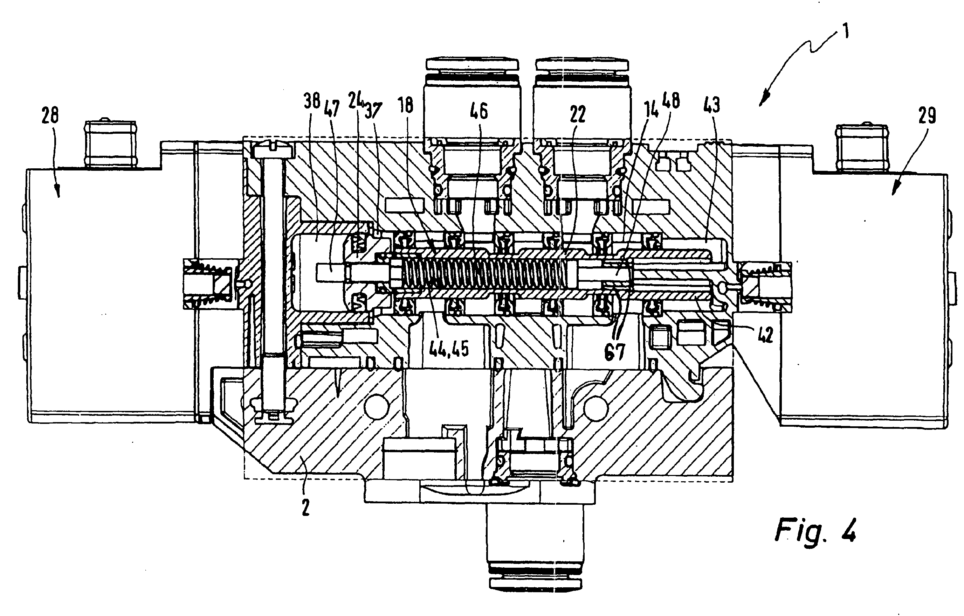

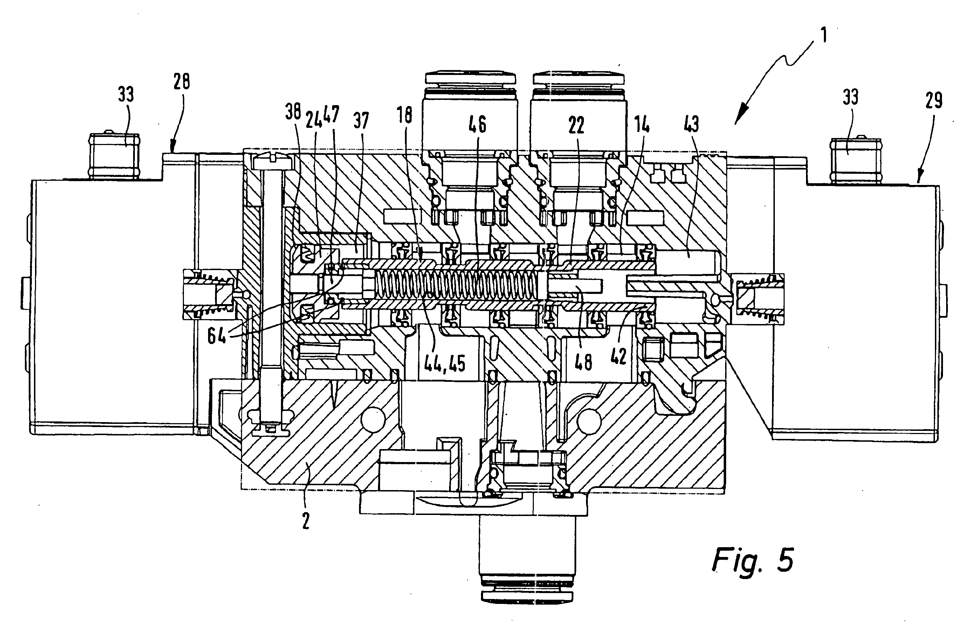

Ausgehend von der in Figur 1 gezeigten Mittelstellung kann der Ventilschieber 18 durch Freigeben des ersten Steuerkanals 26 nach rechts in die aus Figur 4 ersichtliche zweite Schaltstellung umgeschaltet werden. Alternativ besteht die Möglichkeit, den Ventilschieber 18 durch Freigeben des zweiten Steuerkanals 27 nach links in die aus Figur 5 ersichtliche dritte Schaltstellung umzuschalten. Da die der jeweiligen Umschaltrichtung zugeordneten Gesamtbeaufschlagungsflächen gleich groß sind und auch der Betätigungsdruck für beide Umschaltrichtungen die gleiche Höhe aufweist, lassen sich in vorteilhafter Weise gleiche Umschaltgeschwindigkeiten für beide Umschaltrichtungen realisieren.

Wenn sich der Ventilschieber 18 in Richtung der zweiten oder dritten Schaltstellung bewegt, wird der momentan in Bewegungsrichtung vordere Zentrierstößel 47, 48 durch das Ventilgehäuse 2 blockiert, so dass er sich relativ zu dem sich verlagernden Steuerkolben 22 axial in den Verbindungskanal 44 hineinverlagert und dadurch eine Kompression der Druckfedereinrichtung 46 hervorruft. Der bezogen auf die Bewegungsrichtung hintere Zentrierstößel hebt dabei von der ihm gegenüberliegende Gehäusewand des Ventilgehäuses 2 ab. Wird anschließend der Betätigungsdruck wieder weggenommen, entspannt sich die Druckfedereinrichtung 46 und drückt den Ventilschieber 18 wieder soweit zurück, dass sich neuerlich beide Zentrierstößel 47, 48 axial am Ventilgehäuse abstützen.

Zu den Vorsteuerventilen 28, 29 ist noch zu erwähnen, dass diese prinzipiell auch an der gleichen Stirnseite des Mehrwegeventils 1 angeordnet sein könnten, wobei sie in diesem Fall auch in einer Vorsteuereinheit zusammengefasst sein können.

Das Rückstellen in die Mittelstellung geschieht einfach durch Ablassen des zuvor eingespeisten Steuerfluides über die Vorsteuerventile 28, 29, die hierzu eine nicht weiter abgebildete Entlüftungsöffnung aufweisen.

Abweichend vom Ausführungsbeispiel wäre es prinzipiell auch möglich, den zweiten Steuerkanal 27 direkt in die hintere Beaufschlagungskammer 37 einmünden zu lassen. Über den Verbindungskanal 44 hinweg würde auch hier in dem hinteren Endabschnitt 43 der Gehäuseausnehmung 14 der gleiche Betätigungsdruck herrschen.

Die beim Ausführungsbeispiel realisierte Lösung ist besonders vorteilhaft, weil sie es ermöglicht, den Ventilschieber 18 mittels eines an nur einem Endbereich angeordneten, doppeltwirkend beaufschlagbaren Betätigungskolbens 24 umzuschalten und dennoch den Aufwand für die im Ventilgehäuse 2 verlaufenden Steuerkanäle 26, 27 sehr gering zu halten. Wenn die Vorsteuerventile 28, 29 an den einander entgegengesetzten Stirnseiten des Mehrwegeventils 1 angeordnet sind, wird innerhalb des Ventilgehäuses 2 ein nur kurzer Kanalast 26a, 27a der Steuerkanäle 26, 27 zur Verbindung des Vorsteuerventils 28, 29 mit der Gehäuseausnehmung 14 benötigt. Die Kanalführung kann sich auf den zugeordneten Endbereich des Ventilgehäuses 2 beschränken.

Ein weiterer Vorteil beim Ausführungsbeispiel besteht darin, dass der für die Verteilung des Steuerfluides verwendete Verbindungskanal 44 innerhalb des Steuerkolbens 22 gleichzeitig genutzt werden kann, um Komponenten der Zentriermittel aufzunehmen, die den Ventilschieber 18 im unbetätigten Zustand in der Mittelstellung halten.

## Patentansprüche

1. Mehrwegeventil, mit einem Ventilgehäuse (2), das eine längliche Gehäuseausnehmung (14) definiert, in der ein zwischen mehreren Schaltstellungen umschaltbarer Ventilschieber (18) angeordnet ist, der einen zur Steuerung von Fluidströmen mit am Ventilgehäuse angeordneten Dichtflächen (16a) zusammenwirkenden länglichen Steuerkolben (22) und einen an einem vorderen Endbereich (23) des Steuerkolbens (22) angeordneten, als bewegliche Trennwand zwischen einer auf der Seite des Steuerkolbens (22) angeordneten und letzteren ringförmig umschließenden hinteren Beaufschlagungskammer (37) und einer auf der dem Steuerkolben (22) entgegengesetzten Seite angeordneten vorderen Beaufschlagungskammer (38) bildenden Betätigungskolben (24) aufweist, wobei der Steuerkolben (22) mit seinem dem Betätigungskolben (24) entgegengesetzten hinteren Endbereich (42) frei endend in einen hinteren Endabschnitt (43) der Gehäuseausnehmung (40) hineinragt und wobei zwei Vorsteuerventile (28, 29) vorhanden sind, durch die die beiden Beaufschlagungskammern (37, 38) zur Vorgabe der Schaltstellung des Ventilschiebers (18) gesteuert mit fluidischem Druckmedium beaufschlagbar sind, **dadurch gekennzeichnet, dass** die hintere Beaufschlagungskammer (37) über mindestens einen internen Verbindungskanal (44) des Steuerkolbens (22) unabhängig von der Schaltstellung des Ventilschiebers (18) ständig mit dem hinteren Endabschnitt (43) der Gehäuseausnehmung (14) in Fluidverbindung steht.

2. Mehrwegeventil nach Anspruch 1, **dadurch gekennzeichnet, dass** zur gesteuerten Fluidbeaufschlagung der beiden Beaufschlagungskammern (37, 38) zwei von jeweils einem der beiden Vorsteuerventile (28, 29) beherrschte erste und zweite Steuerkanäle (26, 27) vorhanden sind, die in die Gehäuseausnehmung (14) einmünden, wobei der für die Fluidbeaufschlagung der vorderen Beaufschlagungskammer (38) vorgesehene erste Steuerkanal direkt in die vordere Beaufschlagungskammer (38) einmündet.

3. Mehrwegeventil nach Anspruch 2,**dadurch gekennzeichnet, dass** der für die Fluidbeaufschlagung der hinteren Beaufschlagungskammer (37) vorgesehene zweite Steuerkanal (27) direkt in den hinteren Endabschnitt (43) der Gehäuseausnehmung (14) einmündet, derart dass die hintere Beaufschlagungskammer (37) durch den mindestens einen internen Ventilkanal (44) des Steuerkolbens (22) hindurch mit Druckmedium aus dem hinteren Endabschnitt (43) der Gehäuseausnehmung (14) versorgt wird.

4. Mehrwegeventil nach einem der Ansprüche 1 bis 3, **dadurch gekennzeichnet, dass** der Steuerkolben (22) durchgehend hohl ausgebildet ist, wobei sein Hohlraum den einzigen Verbindungskanal (44) bildet.

5. Mehrwegeventil nach einem der Ansprüche 1 bis 4, **dadurch gekennzeichnet, dass** der mindestens eine Verbindungskanal (44) an der rückwärtigen Stirnfläche (62) des Steuerkolbens (22) zu dem hinteren Endabschnitt (43) der Gehäuseausnehmung (14) ausmündet.

6. Mehrwegeventil nach einem der Ansprüche 1 bis 5, **dadurch gekennzeichnet, dass** der mindestens eine Verbindungskanal (44) über mindestens einen Querkanal (64) des Ventilschiebers (18) im Anschluss an den Betätigungskolben (24) mit der hinteren Beaufschlagungskammer (37) kommuniziert.

7. Mehrwegeventil nach Anspruch 6, **dadurch gekennzeichnet, dass** der Steuerkolben (22) und der Betätigungskolben (24) über eine in sie beide eintauchende Verbindungshülse (52) mit axialem Abstand fest miteinander verbunden sind, wobei der Innenraum (63) der Verbindungshülse (52) mit dem Verbindungskanal (44) kommuniziert und der mindestens eine Querkanal (64) die Wandung der Verbindungshülse (52) im Bereich des axialen Zwischenraumes (65) zwischen Steuerkolben (22) und Betätigungskolben (24) durchsetzt.

8. Mehrwegeventil nach einem der Ansprüche 1 bis 7,**dadurch gekennzeichnet, dass** der Ventilschieber (18) koaxial durchgehend von einem Ventilschieberhohlraum (45) durchsetzt ist, in dem sich eine Druckfedereinrichtung (46) befindet, die zwei sie axial flankierende und relativ zum Ventilschieber (18) axial bewegliche Zentrierstößel (47, 48) beaufschlagt, die den Ventilschieber (18) durch gleichzeitige axiale Abstützung gegenüber dem Ventilgehäuse (2) in einer Mittelstellung zentrieren, wobei der Ventilschieberhohlraum (45) den mindestens einen Verbindungskanal (44) bildet.

9. Mehrwegeventil nach Anspruch 8, **dadurch gekennzeichnet, dass** die beiden Zentrierstößel (47, 48) jeweils einen von der Druckfedereinrichtung (46) beaufschlagten Kopfabschnitt (54) aufweisen, mit dem sie sich entgegen der Federkraft an einer im Steuerkolben (22) fixierten Anschlaghülse (52, 53) abstützen können, die sie mit einem länglichen Stößelabschnitt (55) koaxial in axial verschieblicher Weise durchsetzen.

10. Mehrwegeventil nach Anspruch 9, **dadurch gekennzeichnet, dass** die dem hinteren Endbereich (42) des Steuerkolbens (22) zugeordnete hintere Anschlaghülse (53) in dem Verbindungskanal (44) fixiert ist und mindestens eine axiale Fluiddurchtrittsöffnung (67) aufweist.

11. Mehrwegeventil nach Anspruch 9 oder 10, **dadurch gekennzeichnet, dass** die dem vorderen Endabschnitt des Steuerkolbens (22) zugeordnete vordere Anschlaghülse (52) als Verbindungshülse zur axial festen Verbindung zwischen Steuerkolben (22) und Betätigungskolben (24) fungiert, wobei ihre Wandung von mindestens einem die fluidische Verbindung zwischen dem Verbindungskanal (44) und der hinteren Beaufschlagungskammer (37) herstellenden Querkanal (64) durchsetzt ist.

12. Mehrwegeventil nach einem der Ansprüche 1 bis 11, **dadurch gekennzeichnet, dass** die beiden Vorsteuerventile (28, 29) an einander entgegengesetzten Stirnseiten des Mehrwegeventils (1) angeordnet sind.

## Claims

1. Multiway valve with a valve housing (2) which defines an oblong housing recess (14) in which is located a valve spool (18), switchable between several switching positions, and has an oblong control piston (22) working in conjunction with sealing faces (16a) on the valve housing for the control of fluid flows, and an actuating piston (24) located at a front end section (23) of the control piston (22) and forming a movable partition between a rear pressurisation chamber (37) located on the side of the control piston (22) and encompassing the latter like a ring, and a front pressurisation chamber (38) located on the side opposite the control piston (22), wherein the control piston (22) extends with its rear end section (42) opposite the actuating piston (24), free ending, into a rear end section (43) of the housing recess (40), and wherein two pilot valves (28, 29) are provided, through which the two pressurisation chambers (37, 38) may be supplied with fluidic pressure medium in a controlled manner to preset the switching position of the valve spool (18), **characterised in that** the rear pressurisation chamber (37) is in constant fluidic connection with the rear end section (43) of the housing recess (14), irrespective of the switching position of the valve spool (18), via one or more internal connecting passages (44) of the control piston (22).

2. Multiway valve according to claim 1 **characterised in that**, for controlled fluid pressurisation of the two pressurisation chambers (37, 38), there are provided two first and second control passages (26, 27), each controlled by one of the two pilot valves (28, 29), which lead into the housing recess (14), wherein the first control passage provided for fluid pressurisation of the front pressurisation chamber (38) leads directly into the front pressurisation chamber (38).

3. Multiway valve according to claim 2, **characterised in that** the second control passage (27) provided for fluid pressurisation of the rear pressurisation chamber (37) leads directly into the rear end section (43) of the housing recess (14) in such a way that the rear pressurisation chamber (37) is supplied with pressure medium from the rear end section (43) of the housing recess (14), through the internal valve passage or passages (44) of the control piston (22).

4. Multiway valve according to any of claims 1 to 3, **characterised in that** the control piston (22) is hollow throughout, with its hollow space forming the single connecting passage (44).

5. Multiway valve according to any of claims 1 to 4, **characterised in that** the connecting passage or passages (44) lead out at the rear end face (62) of the control piston (22) to the rear end section (43) of the housing recess (14).

6. Multiway valve according to any of claims 1 to 5, **characterised in that** the connecting passage or passages (44) communicate(s) with the rear pressurisation chamber (37) via at least one lateral passage (64) of the valve spool (18), in the connection to the actuating piston (24).

7. Multiway valve according to claim 6, **characterised in that** the control piston (22) and the actuating piston (24) are connected rigidly to one another, with axial clearance, through a connecting sleeve (52) dipping into both of them, wherein the interior (63) of the connecting sleeve (52) communicates with the connecting passage (44), and the lateral passage or passages (64) pass(es) through the wall of the connecting sleeve (52) in the area of the axial gap (65) between the control piston (22) and the actuating piston (24).

8. Multiway valve according to any of claims 1 to 7, **characterised in that** there is passing coaxially and continuously through the valve spool (18) a valve spool cavity (45) in which is located a compression spring device (46) acting on two centring plungers (47, 48) which flank it axially and are axially movable relative to the valve spool (18) and which centre the valve spool (18) in a middle position by simultaneous axial support relative to the valve housing (2), wherein the valve spool cavity (45) forms the connecting passage or passages (44).

9. Multiway valve according to claim 8, **characterised in that** each of the two centring plungers (47, 48) has a head section (54), acted on by the compression spring device (46), by which they are able to support themselves against the spring force at a stop sleeve (52, 53) fixed in the control piston (22), and through which they pass coaxially in an axially movable manner with an elongated plunger section (55).

10. Multiway valve according to claim 9, **characterised in that** the rear stop sleeve (53) assigned to the rear end section (42) of the control piston (22) is fixed in the connecting passage (44) and has at least one axial fluid passage opening (67).

11. Multiway valve according to claim 9 or 10, **characterised in that** the front stop sleeve (52) assigned to the front end section of the control piston (22) acts as a connecting sleeve for axially fixed connection between the control piston (22) and the actuating piston (24), wherein at least one lateral passage (64) creating the fluidic connection between the connecting passage (44) and the rear pressurisation chamber (37) passes through its wall.

12. Multiway valve according to any of claims 1 to 11, **characterised in that** the two pilot valves (28, 29) are located on opposite end faces of the multiway valve (1).

## Revendications

1. Distributeur à plusieurs voies, avec un boîtier de vanne (2) qui définit un évidement de boîtier oblong (14) dans lequel est placé un boisseau de vanne (18) pouvant être commuté entre plusieurs positions de commutation, boisseau qui présente un piston de commande oblong (22) coopérant avec des surfaces d'étanchéité (16a) placées sur le boîtier de vanne pour commander des écoulements de fluide et un piston d'actionnement (24) placé dans une zone d'extrémité antérieure (23) du piston de commande, formant un cloison mobile entre une chambre de chargement postérieure (37) placée du côté du piston de commande (22) et entourant annulairement celui-ci et une chambre de chargement antérieure (38) placée du côté opposé au piston de commande (22), dans lequel le piston de commande (22) pénètre avec sa zone d'extrémité postérieure (42) opposée au piston d'actionnement (24) dans une section d'extrémité postérieure (43) de l'évidement de boîtier (40) en se terminant librement et dans lequel deux vannes de précommande (28, 29) sont présentes, par lesquelles les deux chambres de chargement (37, 38) peuvent être chargées de manière contrôlée avec un milieu fluide sous pression pour déterminer la position de commutation du boisseau de vanne (18), **caractérisé en ce que** la chambre de chargement postérieure (37) est en communication de fluide permanente avec la section d'extrémité postérieure (43) par l'intermédiaire d'au moins un canal de jonction interne (44) du piston de commande (22), indépendamment de la position de commutation du boisseau de vanne (18).

2. Distributeur à plusieurs voies selon la revendication 1, **caractérisé en ce que**, pour le chargement contrôlé en fluide des deux chambres de chargement (37, 38), deux canaux de commande (26, 27), premier et deuxième, commandés chacun par l'une des deux vannes de précommande (28, 29) sont présents, le premier canal de commande prévu pour le chargement en fluide de la chambre de chargement antérieure (38) débouchant directement dans la chambre de chargement antérieure (38).

3. Distributeur à plusieurs voies selon la revendication 2, **caractérisé en ce que** le deuxième canal de commande (27) prévu pour le chargement en fluide de la chambre de chargement postérieure (37) débouche directement dans la section d'extrémité postérieure (43) de l'évidement de boîtier (14), de telle manière que la chambre de chargement postérieure (37) est alimentée, à travers le canal de vanne (44) interne au nombre d'au moins un du piston de commande (22), en milieu sous pression provenant de la section d'extrémité postérieure (43) de l'évidement de boîtier (14).

4. Distributeur à plusieurs voies selon l'une des revendications 1 à 3, **caractérisé en ce que** le piston de commande (22) est réalisé entièrement creux, sa cavité formant l'unique canal de jonction (44).

5. Distributeur à plusieurs voies selon l'une des revendications 1 à 4, **caractérisé en ce que** le canal de jonction (44) au nombre d'au moins un débouche sur la surface frontale arrière (62) du piston de commande (22) en direction de la section d'extrémité postérieure (43) de l'évidement de boîtier (14).

6. Distributeur à plusieurs voies selon l'une des revendications 1 à 5, **caractérisé en ce que** le canal de jonction (44) au nombre d'au moins un communique avec la chambre de chargement postérieure (37) par l'intermédiaire d'au moins un canal transversal (64) du coulisseau de vanne (18) à la suite du piston d'actionnement (24).

7. Distributeur à plusieurs voies selon la revendication 6, **caractérisé en ce que** le piston de commande (22) et le piston d'actionnement (24) sont reliés mutuellement de manière fixe à distance axiale l'un de l'autre part une douille de jonction (52) s'enfonçant dans chacun d'eux, l'espace intérieure (63) de la douille de jonction (52) communiquant avec le canal de jonction (44) et le canal transversal (64) au nombre d'au moins un traversant la paroi de la douille de jonction (52) au niveau de l'interstice axial (65) entre piston de commande (22) et piston d'actionnement (24).

8. Distributeur à plusieurs voies selon l'une des revendications 1 à 7, **caractérisé en ce que** le boisseau de vanne (18) est traversé entièrement par une cavité de boisseau (45) dans laquelle se trouve un dispositif à ressort de pression (46), lequel charge deux poinçons de centrage (47, 48) le flanquant et mobiles axialement par rapport au boisseau de vanne (18), poinçons qui centrent le boisseau de vanne (18) dans une position centrale par un soutien axial simultané par rapport au boîtier de vanne (2), la cavité de boisseau (45) formant le canal de jonction (44) au nombre d'au moins un.

9. Distributeur à plusieurs voies selon la revendication 8, **caractérisé en ce que** les deux poinçons de centrage (47, 48) présentent chacun une section de tête (54) chargée par le dispositif à ressort de pression (46), avec laquelle ils peuvent s'appuyer contre la force du ressort sur une douille de butée (52, 53) fixée dans le piston de commande (22), douille qu'ils traversent de manière coaxiale et mobile axialement avec une section de poinçon oblongue (55).

10. Distributeur à plusieurs voies selon la revendication 9, **caractérisé en ce que** la douille de butée postérieure (53) associée à la zone d'extrémité postérieure (42) du piston de commande (22) est fixée dans le canal de jonction (44) et présente au moins une ouverture axiale (67) de passage de fluide.

11. Distributeur à plusieurs voies selon la revendication 9 ou 10, **caractérisé en ce que** la douille de butée antérieure (52) associée à la section d'extrémité antérieure du piston de commande (22) sert de douille de jonction pour une liaison axialement fixe entre piston de commande (22) et piston d'actionnement (24), sa paroi étant traversée par au moins un canal transversal (64) établissant la communication de fluide entre le canal de jonction (44) et la chambre de chargement postérieure (37).

12. Distributeur à plusieurs voies selon l'une des revendications 1 à 11, **caractérisé en ce que** les deux vannes de précommande (28, 29) sont placées sur des faces frontales mutuellement opposées du distributeur à plusieurs voies (1).
